# EUROPÄISCHE PATENTSCHRIFT

(11) **EP 3 686 074 B1**
(45) Veröffentlichungstag und Bekanntmachung des Hinweises auf die Patenterteilung: **21.09.2022**
(21) Anmeldenummer: 20152577.1
(22) Anmeldetag: 20.01.2020
(51) Int. Cl.: B60T 11/32, B60T 17/04, B60T 17/18

(54) **MEHRKREISSCHUTZVENTIL EINER DRUCKLUFTANLAGE**
MULTI-CIRCUIT SAFETY VALVE FOR A COMPRESSED AIR SYSTEM
SOUPAPE DE SÉCURITÉ À CIRCUITS MULTIPLES D'UNE INSTALLATION D'AIR COMPRIMÉ

(30) Priorität: 24.01.2019 DE 102019101685
(43) Veröffentlichungstag der Anmeldung: 29.07.2020
(73) Patentinhaber: ZF CV Systems Europe BV, 1170 Brussels (BE)
(72) Erfinder: SCHUPPERT, Fabian, 31515 Wunstorf (DE)
(74) Vertreter: Copi, Joachim

(56) Entgegenhaltungen:
- EP-A1- 0 810 136
- DE-A1-102013 000 206
- DE-A1-102017 000 694

## Beschreibung

Die Erfindung betrifft ein Mehrkreisschutzventil einer Druckluftanlage eines Kraftfahrzeugs, das zwischen dem Ausgangsanschluss einer Druckluftversorgungsanlage und den Eingangsanschlüssen mehrerer Verbraucherkreise angeordnet ist, und in dem für zumindest einige Verbraucherkreise jeweils ein Kreisschutzventil angeordnet ist, welche jeweils in einer Verbindungsleitung zwischen dem Ausgangsanschluss der Druckluftversorgungsanlage und dem Eingangsanschluss des betreffenden Verbraucherkreises angeordnet sind.

In einer mehrere Verbraucherkreise aufweisenden Druckluftanlage hat ein Mehrkreisschutzventil die Funktion, die an einem Ausgangsanschluss einer Druckluftversorgungsanlage anstehende Druckluft unabhängig voneinander an die Verbraucherkreise weiterzuleiten, und bei einem Ausfall oder Defekt eines der Verbraucherkreise diesen automatisch von der Druckluftversorgung zu trennen, so dass die übrigen Verbraucherkreise weiterhin mit Druckluft versorgt werden können. Hierzu stehen die Eingangsanschlüsse der Verbraucherkreise über jeweils ein innerhalb des Mehrkreisschutzventils angeordnetes Kreisschutzventil mit dem Ausgangsanschluss der Druckluftversorgungsanlage oder einer druckführenden Versorgungsleitung eines anderen Verbraucherkreises in Verbindung.

Die Kreisschutzventile sind üblicherweise als passiv gesteuerte, also selbsttätig wirksame Überströmventile ausgebildet, bei denen das Verhältnis zwischen Öffnungs- und Schließdruck geometrisch bestimmt ist, und bei denen einer dieser beiden Drücke durch eine Federkraft zu definieren ist. Ein Überströmventil öffnet zunächst dann, wenn der am Eingangsanschluss anliegende Druck den eingestellten Öffnungsdruck erreicht oder überschritten hat. Es schließt dann, wenn durch einen Druckabfall am Ausgangsanschluss der Schließdruck des Überströmventils an der Wirkfläche des Kolbens oder der Membran im Ventil erreicht oder unterschritten wird.

Damit die Betriebsbremskreise bei der Inbetriebnahme des betreffenden Fahrzeugs zuerst mit Druckluft aufgefüllt und einschlägige EU-Richtlinien bezüglich des Lösens der Feststellbremsen erfüllt werden, weisen die Überströmventile der Sekundärverbraucherkreise einschließlich des Überströmventils des Feststellbremskreises üblicherweise einen höheren Öffnungsdruck als die Überströmventile der Betriebsbremskreise auf. Alternativ zu einer parallelen Anordnung der Überströmventile können die Überströmventile der Sekundärverbraucherkreise hierzu innerhalb des Mehrkreisschutzventils den Betriebsbremskreisen auch seriell nachgeschaltet an die Druckluftversorgung angeschlossen sein.

Durch den seriellen Anschluss der Überströmventile der Sekundärverbraucherkreise an die Ausgangsabschnitte der Verbindungsleitungen der Betriebsbremskreise und/oder den höheren Öffnungsdruck der Überströmventile der Sekundärverbraucherkreise werden diese erst dann belüftet, wenn die Überströmventile der Betriebsbremskreise bereits geöffnet sind, und sich in den Ausgangsabschnitten der Verbindungsleitungen der Betriebsbremskreise ein den Öffnungsdruck der Überströmventile der Sekundärverbraucherkreise übersteigender Druck eingestellt hat. Dadurch ist sichergestellt, dass die mit Federspeicherbremsen versehene Feststellbremsanlage erst dann mit Druckluft versorgt wird und damit ein Lösen der Feststellbremsen möglich ist, wenn die Betriebsbremskreise hinreichend mit Druckluft aufgefüllt sind, so dass das betreffende Kraftfahrzeug nach dem Lösen der Feststellbremsen mittels der Betriebsbremsen abgebremst oder zumindest an einem Wegrollen gehindert werden kann. Die Verbraucher der übrigen Sekundärverbraucherkreise werden dadurch ebenfalls nachrangig mit Druckluft versorgt.

Aus der DE 10 2017 000 694 A1 ist ein Mehrkreisschutzventil einer Druckluftbremsanlage bekannt, bei dem den beiden Überströmventilen von drei Sekundärverbraucherkreisen jeweils ein Druckbegrenzungsventil vorgeschaltet ist und die Überströmventile der betreffenden Sekundärverbraucherkreise den Überströmventilen der beiden Betriebsbremskreise seriell nachgeschaltet sind.

In der WABCO-Druckschrift "Grundlehrgang 7, Vierkreis-Schutzventile", die im Internet als PDF-Datei unter http://inform.wabco-auto.com/intl/pdf/815/00/57/8150100573-07.pdf heruntergeladen werden kann, ist der Aufbau und die Funktionsweise eines Vierkreisschutzventils mit vier paarweise gegenüberliegend angeordneten, als Membranventile ausgeführten Überströmventilen beschrieben. In einer ersten Ausführung des Vierkreisschutzventils sind die beiden Überströmventile von zwei Sekundärverbraucherkreisen den beiden Überströmventilen der beiden Betriebsbremskreise seriell nachgeschaltet angeordnet. In einer zweiten Ausführung des Vierkreisschutzventils sind die beiden Überströmventile der zwei Sekundärverbraucherkreise parallel zu den beiden Überströmventilen der beiden Betriebsbremskreise angeordnet.

Ein Mehrkreisschutzventil mit vier in Reihe angeordneten, als Membranventile ausgeführten Überströmventilen mit einer gemeinsamen Versorgungskammer und einer gemeinsamen Membran ist aus der DE 10 2012 014 733 A1 bekannt.

Bei Mehrkreisschutzventilen mit selbsttätig wirksamen, als Membran- oder Kolbenventile ausgeführten Überströmventilen ist die Funktion der Kreisschutzventile durch die mechanisch vorgegebenen Öffnungs- und Schließdrücke festgelegt und auf diese Funktion beschränkt. So ist zum Beispiel das bedarfsweise Öffnen eines Kreisschutzventils vor dem Erreichen oder Überschreiten des Öffnungsdruckes oder nach dem Erreichen oder Unterschreiten des Schließdruckes bei einer Ausführung des Kreisschutzventils als Überströmventil nicht möglich. Ebenso ist das bedarfsweise Schließen eines Kreisschutzventils nach dem Erreichen oder Überschreiten des Öffnungsdruckes oder vor dem Erreichen oder Unterschreiten des Schließdruckes bei einer Ausführung des Kreisschutzventils als Überströmventil nicht möglich. Zudem besteht bei der Verwendung von Überströmventilen bauartbedingt die Notwendigkeit, für Kraftfahrzeuge verschiedener Gewichtsklassen unterschiedliche Mehrkreisschutzventile vorzusehen und diese durch die Justierung der Vorspannung der Federelemente an den Überströmventilen an das jeweilige Kraftfahrzeug, die Vorgaben des jeweiligen Fahrzeugherstellers sowie international unterschiedliche gesetzliche Regelungen anzupassen. Aufgrund von betriebsbedingtem Verschleiß an den Schaltelementen (Membranen oder Kolben) und den Ventilsitzen der Überströmventile sowie einer Ermüdung der Federelemente ist zudem in bestimmten betriebszeitabhängigen und/oder fahrstreckenabhängigen Abständen eine mechanische Nachjustierung der Überströmventile erforderlich.

In der DE 10 2005 018 888 B4 ist zwar ein Mehrkreisschutzventil mit mehreren Überströmventilen beschrieben, von denen in eines der Überströmventile ein Elektromagnet integriert ist. Das betreffende Überströmventil ist den Überströmventilen der beiden Betriebsbremskreise seriell nachgeschaltet angeordnet und dem Feststellbremskreis sowie dem Anhängerversorgungskreis zugeordnet. Durch die Bestromung des Elektromagneten kann das betreffende Überströmventil bedarfsweise unterhalb des Schließdruckes geöffnet werden, wodurch eine Nachversorgung der angeschlossenen Verbraucherkreise ohne einen dort angeschlossenen Druckluftbehälter möglich ist. Die Zusatzfunktion dieses bekannten Überströmventils ist jedoch auf das elektromagnetische Offnen beschränkt.

DE 10 2013 000206 A1 und EP 0 810 136 A1 können ebenso als Stand der Technik zitiert werden.

Der vorliegenden Erfindung lag die Aufgabe zugrunde, ein Mehrkreisschutzventil einer Druckluftanlage eines Kraftfahrzeugs der eingangs genannten Bauart vorzustellen, welches universell für Kraftfahrzeuge unterschiedlicher Gewichtsklassen verwendbar ist, und dessen Kreisschutzventile bei einfachem Aufbau leicht an das jeweilige Kraftfahrzeug sowie an die Vorgaben des jeweiligen Fahrzeugherstellers angepasst und in Sonderfunktionen unabhängig von den vorgesehenen Öffnungs- und Schließdrücken sowohl geöffnet als auch geschlossen werden können.

Die Lösung dieser Aufgabe wird mit einem Mehrkreisschutzventil erreicht, welches die Merkmale des Anspruchs 1 aufweist. Vorteilhafte Weiterbildungen sind in den abhängigen Ansprüchen definiert.

Die Erfindung betrifft demnach ein Mehrkreisschutzventil einer Druckluftanlage eines Kraftfahrzeugs, das zwischen dem Ausgangsanschluss einer Druckluftversorgungsanlage und den Eingangsanschlüssen mehrerer Verbraucherkreise angeordnet ist, und in dem für zumindest einige Verbraucherkreise jeweils ein Kreisschutzventil angeordnet ist, welche jeweils in einer Verbindungsleitung zwischen dem Ausgangsanschluss der Druckluftversorgungsanlage und dem Eingangsanschluss des betreffenden Verbraucherkreises angeordnet sind.

Zur Lösung der gestellten Aufgabe ist bei diesem Mehrkreisschutzventil außerdem vorgesehen, dass mindestens eines der Kreisschutzventile als ein von einem elektronischen Steuergerät über jeweils eine elektrische Steuerleitung aktiv steuerbares Absperrventil ausgebildet ist, und dass zumindest an den ausgangsseitigen Abschnitten der Verbindungsleitungen der Betriebsbremskreise und des Feststellbremskreises jeweils ein Drucksensor angeschlossen ist, der in das elektronische Steuergerät integriert oder über eine elektrische Sensorleitung an das elektronische Steuergerät angeschlossen ist.

Durch die Ausbildung mindestens eines Kreisschutzventils als ein von einem elektronischen Steuergerät aktiv steuerbares Absperrventil kann der mindestens eine an dieses angeschlossene Verbraucherkreis flexibel mit Druckluft versorgt oder von der Druckluftversorgung getrennt werden. Der Öffnungsdruck und der Schließdruck des aktiv steuerbaren Absperrventils sind nicht mehr technisch vorgegeben, sondern sind nun als Steuerparameter in einem Datenspeicher der elektronischen Steuereinheit abgespeichert und können somit flexibel an unterschiedliche Fahrzeugklassen, Vorgaben der Fahrzeughersteller und international unterschiedliche gesetzliche Regelungen angepasst werden. Da die in den Betriebsbremskreisen und dem Feststellbremskreis anliegenden Drücke über die vorgesehenen Drucksensoren erfasst werden, können die einschlägigen Sicherheitsvorschriften, die zum Beispiel die erstrangige Belüftung der Betriebsbremskreise vorsehen, problemlos eingehalten werden.

Gemäß einer ersten Ausgestaltung des erfindungsgemäßen Mehrkreisschutzventils ist vorgesehen, dass zumindest das Kreisschutzventil des Feststellbremskreises als ein aktiv steuerbares Absperrventil ausgebildet ist. Wenn nun ein Defekt an einem oder beiden Betriebsbremskreisen auftritt und das betreffende Kraftfahrzeug deshalb abgeschleppt werden muss, kann der Feststellbremskreis in einer Sonderfunktion nun ohne eine Fremdbelüftung über die eigene Druckluftversorgungsanlage belüftet und somit die Feststellbremsen gelöst werden.

Gemäß einer zweiten Ausgestaltung des erfindungsgemäßen Mehrkreisschutzventils ist vorgesehen, dass zumindest die Kreisschutzventile der Betriebsbremskreise und des Feststellbremskreises als aktiv steuerbare Absperrventile ausgebildet sind. Die Bremskreise bilden die wichtigsten Verbraucherkreise, so dass es vorteilhaft ist, wenn diese über aktiv steuerbare Absperrventile mit der Druckluftversorgung verbunden oder von dieser getrennt werden. Eine bei Überströmventilen aufgrund von Verschleiß an bestimmten Bauteilen erforderliche mechanische Nachjustierung entfällt bei aktiv steuerbaren Absperrventilen, so dass die Funktion der Betriebsbremsen und der Feststellbremsen ohne Wartungsarbeiten über eine längere Betriebszeit in gleichbleibender Qualität gewährleistet ist.

Ein aktiv steuerbares Absperrventil könnte als ein direkt angesteuertes Magnetventil ausgebildet sein, was jedoch mit einem relativ großen Elektromagneten und einem entsprechend hohen Stromverbrauch verbunden wäre. Alternativ dazu könnte ein aktiv steuerbares Absperrventil auch als ein druckgesteuertes Schaltventil ausgebildet sein, dessen Steuereingang über ein 3/2-Wege-Magnetschaltventil oder zwei 2/2-Wege-Magnetschaltventile wechselweise mit einem hohen Steuerdruck beaufschlagt oder drucklos geschaltet wird. Eine derartige Ausbildung eines aktiv steuerbaren Absperrventils wäre jedoch mit einem hohen apparativen Aufbau, einem entsprechend großen Bauraumbedarf und mit einer erhöhten Störungsanfälligkeit verbunden.

Daher ist erfindungsgemäß vorgesehen, dass mindestens eines der aktiv steuerbaren Absperrventile als ein pneumatisch servounterstütztes 2/2-Wege-Magnetschaltventil ausgebildet ist, dessen Schaltelement mittels eines Federelementes sowie den an einem Ausgangsanschluss anliegenden pneumatischen Druck im öffnenden Sinn belastet beziehungsweise belastbar ist und durch einen Elektromagneten sowie den an einem Eingangsanschluss anliegenden pneumatischen Druck im schließenden Sinn belastbar ist. Durch die pneumatische Servounterstützung wird die Stromaufnahme des Elektromagneten beim Schließen des Ventils reduziert und das Ventil mit geringer Stromaufnahme im geöffneten Zustand gehalten.

Gemäß einer bevorzugten Konstruktion ist vorgesehen, dass das Absperrventil als ein Membransitzventil ausgebildet ist, dessen Membran mit einem an dem inneren Rand einer gehäusefesten Zentralhülse angeordneten Ventilsitz zusammenwirkt und zusammen mit einer gehäusefesten Innenwand einen Servodruckraum begrenzt. Der Eingangsanschluss des Membransitzventils ist mit einem zylindrischen Ringraum verbunden, der konzentrisch um die Zentralhülse angeordnet ist. Der Ausgangsanschluss des Membransitzventils ist mit einem zylindrischen Zentralraum verbunden, der innerhalb der Zentralhülse angeordnet ist. Ein Elektromagnet mit einer Magnetspule und einem axialbeweglichen Anker ist auf der dem Ventilsitz abgewandten Seite der Membran senkrecht zu dieser angeordnet. Der Anker ist in Richtung der Membran verlängert und endseitig mit einer den Ventilsitz überdeckenden Druckscheibe versehen, die im unbestromten Zustand des Elektromagneten von einem Federelement an der gehäusefesten Innenwand gehalten wird und bei bestromtem Elektromagneten die Membran entgegen der Rückstellkraft des Federelementes gegen den Ventilsitz drückt.

Unter Nutzung der gerade geschilderten Konstruktion kann alternativ dazu vorgesehen sein, dass die Druckscheibe nur an der ankerseitigen Oberseite der Membran befestigt ist und eine Durchströmöffnung aufweist, welche koaxial zu einer mittigen Austrittsöffnung in der Membran ausgebildet ist, wodurch sich eine kostengünstigere Herstellung des Mehrkreisschutzventils ergeben kann.

Das Federelement des Membransitzventils ist in platzsparender Weise als eine Schraubenfeder ausgebildet, die koaxial über dem Anker des Elektromagneten angeordnet ist und axial innen an einem gehäusefesten Ringbund sowie axial außen an einem Ringbund des Ankers abgestützt ist.

Zur Realisierung der pneumatischen Servounterstützung weist die Membran des Membransitzventils vorteilhaft angrenzend an den Ringraum mindestens eine Eintrittsöffnung in den Servodruckraum und angrenzend an den Zentralraum eine mittig angeordnete Austrittsöffnung aus dem Servodruckraum auf. Durch die mindestens eine Eintrittsöffnung kann Druckluft aus dem Ringraum in den Servodruckraum eintreten, tritt jedoch bei stromlosem Elektromagneten und somit an der gehäusefesten Innenwand anliegender Druckscheibe über die Austrittsöffnung wieder in den Zentralraum aus. Wenn der Elektromagnet aber bestromt wird und somit der verlängerte Anker mit der Druckscheibe axial in Richtung des Ventilsitzes verschoben wird, verschließt die Druckscheibe die Austrittsöffnung, und die aus dem Ringraum eintretende Druckluft ist dann auf die Rückseite der Druckscheibe wirksam, wodurch der Elektromagnet pneumatisch unterstützt wird. Mit dem Anlegen der Membran an dem Ventilsitz ist nur noch eine geringe Stromaufnahme des Elektromagneten erforderlich, weil die Membran dann weitgehend pneumatisch über die Druckscheibe auf dem Ventilsitz gehalten wird.

Um bei unbestromtem Elektromagneten das unkontrollierte Ein- und Ausströmen von Druckluft in den Servodruckraum zu begrenzen, ist die Membran des Membransitzventils vorzugsweise derart geformt, dass diese bei drucklosen Anschlüssen und bei unbestromtem Elektromagneten weitgehend an der gehäusefesten Innenwand anliegt.

Damit die Membran des Membransitzventils vollständig an der gehäusefesten Innenwand anliegen und mit konstanter Dicke ausgeführt sein kann, ist die gehäusefeste Innenwand vorteilhaft mit einer kreisscheibenförmigen Vertiefung versehen, die derart dimensioniert ist, dass die Druckscheibe bei unbestromtem Elektromagneten weitgehend bündig darin aufgenommen ist.

Die Erfindung wird nachstehend anhand mehrerer in der beigefügten Zeichnung dargestellter Ausführungsbeispiele näher erläutert. In der Zeichnung zeigt
Fig. 1 eine erste Ausführungsform eines erfindungsgemäßen Mehrkreisschutzventils einer Druckluftanlage in einer schematischen Ansicht,
Fig. 2 eine zweite Ausführungsform eines erfindungsgemäßen Mehrkreisschutzventils einer Druckluftanlage in einer schematischen Ansicht,
Fig. 3 eine dritte Ausführungsform eines erfindungsgemäßen Mehrkreisschutzventils einer Druckluftanlage in einer schematischen Ansicht,
Fig. 4 ein erfindungsgemäßes Kreisschutzventil im unbetätigten Ruhezustand,
Fig. 5 das Kreisschutzventil gemäß Fig. 4 in einem ersten Betriebszustand,
Fig. 6 das Kreisschutzventil gemäß Fig. 4 und Fig. 5 in einem zweiten Betriebszustand, und
Fig. 7 ein bekanntes Mehrkreisschutzventil einer Druckluftanlage in einer schematischen Ansicht.

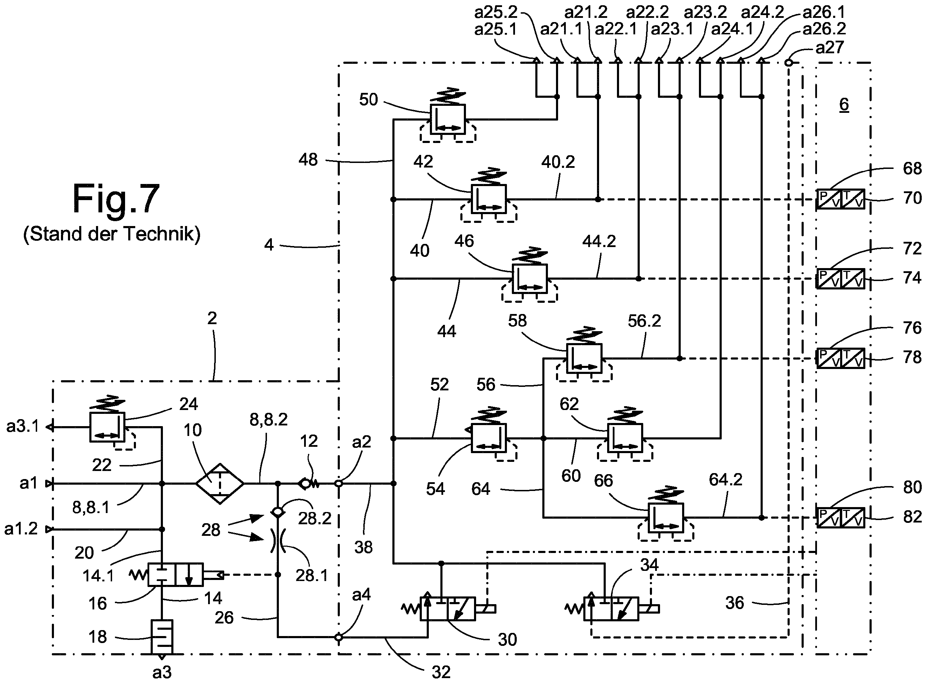

In Fig. 7 sind in schematischer Form eine Druckluftversorgungsanlage 2, ein Mehrkreisschutzventil 4 und ein elektronisches Steuergerät 6 einer Druckluftanlage eines Kraftfahrzeugs, insbesondere eines Nutzfahrzeugs, abgebildet. Das Mehrkreisschutzventil 4 ist allgemein bekannt und dient hier beispielhaft als Ausgangsbeispiel für drei dann nachfolgend beschriebene Ausführungen eines erfindungsgemäßen Mehrkreisschutzventils.

In der bekannten Druckluftversorgungsanlage 2 gemäß Fig. 7 verläuft eine Förderleitung 8 von einem Eingangsanschluss a1 zu einem Ausgangsanschluss a2. An den Eingangsanschluss a1 ist der Förderausgang eines nicht abgebildeten Kompressors angeschlossen. Zwischen dem Eingangsabschnitt 8.1 und dem Ausgangsabschnitt 8.2 der Förderleitung 8 ist eine Trocknereinheit 10 mit integrierter Filtereinheit angeordnet. Die Trocknereinheit 10 ist bevorzugt mit einer auswechselbaren Trockner- und Filterkartusche versehen. In dem Ausgangsabschnitt 8.2 der Förderleitung 8 ist zudem ein in Rückströmrichtung sperrendes Rückschlagventil 12 angeordnet.

An den Eingangsabschnitt 8.1 der Förderleitung 8 ist eine Entlüftungsleitung 14 angeschlossen, in der ein druckgesteuertes Entlüftungsventil 16 angeordnet ist, wobei dieser Eingangsabschnitt 8.1 über einen Schalldämpfer 18 an einen Entlüftungsausgang a3 führt. An den Eingangsabschnitt 14.1 der Entlüftungsleitung 14 ist eine Fremdbelüftungsleitung 20 mit einem Eingangsanschluss a1.2 zur Fremdbelüftung der Druckluftversorgungsanlage 2 angeschlossen. Zudem ist an den Eingangsabschnitt 8.1 der Förderleitung 8 eine weitere Entlüftungsleitung 22 angeschlossen, die über ein Druckbegrenzungsventil 24 an einen weiteren Entlüftungsausgang a3.1 führt.

Das Entlüftungsventil 16 ist als ein 2/2-Wege-Schaltventil ausgebildet, welches bei drucklosem Steuereingang geschlossen ist. Der Steuereingang des Entlüftungsventils 16 ist an eine Regenerationsleitung 26 angeschlossen, die von einem Eingangsanschluss a4 zu dem Ausgangsabschnitt 8.2 der Förderleitung 8 verläuft und dort zwischen der Trocknereinheit 10 und dem Rückschlagventil 12 angeschlossen ist. Zwischen dem Anschluss des Steuereingangs des Entlüftungsventils 16 und dem Ausgangsabschnitt 8.2 der Förderleitung 8 ist ein in Rückströmrichtung sperrendes Drosselrückschlagventil 28 in der Regenerationsleitung 26 angeordnet. Das Drosselrückschlagventil 28 ist vorliegend als eine serielle Anordnung einer Drossel 28.1 und eines Rückschlagventils 28.2 realisiert.

Innerhalb der Baueinheit des Mehrkreisschutzventils 4 sind ein Regenerationssteuerventil 30 und ein Kompressorsteuerventil 34 angeordnet. Das Regenerationssteuerventil 30 ist als ein 2/2-Wege-Magnetschaltventil ausgebildet, mittels dem eine an den Eingangsanschluss a4 der Regenerationsleitung 26 führende Anschlussleitung 32 wechselweise zur Entlüftung der Regenerationsleitung 26 mit einem Entlüftungsausgang oder zur Erzeugung eines Regenerationsluftstroms mit der an den Ausgangsanschluss a2 der Förderleitung 8 der Druckluftversorgungsanlage 2 angeschlossenen Eingangsleitung 38 des Mehrkreisschutzventils 2 verbindbar ist.

Das Regenerationssteuerventil 30 ist von dem elektronischen Steuergerät 6 ansteuerbar, wie eine mit Strich-Punkt gezeichnete Steuerleitung verdeutlicht. Im unbestromten Zustand des Regenerationssteuerventils 30 werden die Anschlussleitung 32 und die Regenerationsleitung 26 entlüftet. Im bestromten Zustand des Regenerationssteuerventils 30 werden die Anschlussleitung 32 und die Regenerationsleitung 26 aus der Eingangsleitung 38 belüftet und dadurch die Trocknereinheit 10 entgegen der Förderrichtung mit bereits getrockneter Druckluft durchströmt und dadurch regeneriert, wobei die Druckluft durch die Entlüftungsleitung 14 und das dann geöffnete Entlüftungsventil 16 in die Umgebung abströmt.

Auch das Kompressorsteuerventil 34 ist als ein 2/2-Wege-Magnetschaltventil ausgebildet, durch das eine an den Steuereingang a27 des Kompressors führende Steuerdruckleitung 36 wechselweise mit einem Entlüftungsausgang oder mit der Eingangsleitung 38 des Mehrkreisschutzventils 2 verbindbar ist. Das Kompressorsteuerventil 34 ist ebenfalls von dem elektronischen Steuergerät 6 ansteuerbar, wie es eine weitere mit Strich-Punkt gezeichnete Steuerleitung verdeutlicht. Im unbestromten Zustand des Kompressorsteuerventils 34 wird die Steuerdruckleitung 36 entlüftet, so dass der Steuereingang a27 des Kompressors drucklos ist, wodurch der Kompressor eingeschaltet ist beziehungsweise eingeschaltet bleibt. Im bestromten Zustand des Kompressorsteuerventils 34 wird die Steuerdruckleitung 36 aus der Eingangsleitung 38 mit Druckluft belüftet, sodass der Steuereingang a27 des Kompressors druckführend ist, wodurch der Kompressor abgeschaltet wird. Der Kompressor wird üblicherweise sowohl während eines Regenerationsbetriebs, also bei umgeschaltetem Regenerationssteuerventil 30, als auch bei vollständig aufgefüllten Druckluftbehältern der Druckluftanlage abgeschaltet.

In dem Mehrkreisschutzventil 2 sind drei jeweils mit einem Überströmventil 42, 46, 50 versehene Verbindungsleitungen 40, 44, 48 parallel zwischen der Eingangsleitung 38 und den Eingangsanschlüssen a21.1, a21.2; a22.1, a22.2; a25.1, a25.2 von zwei ersten Betriebsbremskreisen a21.1, a21.2, zwei zweiten Betriebsbremskreisen a22.1, a22.2 und zwei Luftfederungskreisen a25.1, a25.2 angeordnet. Drei weitere jeweils mit einem Überströmventil 58, 62, 66 versehene Verbindungsleitungen 56, 60, 64 sind parallel zwischen einer mit einem Druckbegrenzungsventil 54 versehenen, an die Eingangsleitung 38 angeschlossenen Verbindungsleitung 52 und den Eingangsanschlüssen a23.1, a23.2; a24.1, a24.2; a26.1, a26.2 von zwei Feststellbremskreisen a23.1, a23.2, zwei Getriebesteuerungskreisen a24.1, 24.2 und zwei Nebenverbraucherkreisen a26.1, a26.2 angeschlossen. Die vorrangige Belüftung der Betriebsbremskreise a21.1, a21.2; a22.1, a22.2 und die nachrangige Belüftung der Feststellbremskreise a23.1, a23.2 wird durch niedrigere Öffnungsdrücke an den Überströmventilen 42, 46 und einen höheren Öffnungsdruck an dem Überströmventil 58 erreicht. Durch das Druckbegrenzungsventil 54 werden die Feststellbremskreise a23.1, a23.2, die Getriebesteuerungskreise a24.1, 24.2 und die Nebenverbraucherkreise a26.1, a26.2 vor dem höheren Druckniveau für die Betriebsbremskreise a21.1, a21.2; a22.1, a22.2 und die Luftfederungskreise a15.1, a25.2 geschützt.

An die Ausgangsabschnitte 40.2, 44.2 der Verbindungsleitungen 40, 44 für die Betriebsbremskreise a21.1, a21.2; a22.1, a22.2, an den Ausgangsabschnitt 56.2 der Verbindungsleitung 56 für die Feststellbremskreise a23.1, a23.2 sowie an den Ausgangsabschnitt 64.2 für die Nebenverbraucherkreise a26.1, a26.2 sind jeweils ein Drucksensor 68, 72, 76, 80 und ein Temperatursensor 70, 74, 78, 82 angeschlossen, die vorliegend in das elektronische Steuergerät 6 integriert sind. Diese Sensoren dienen zur Erfassung des Luftdruckes und der Lufttemperatur in den betreffenden Verbraucherkreisen a21.1, a21.2; a22.1, a22.2; a23.1, a23.2; a26.1, a26.2.

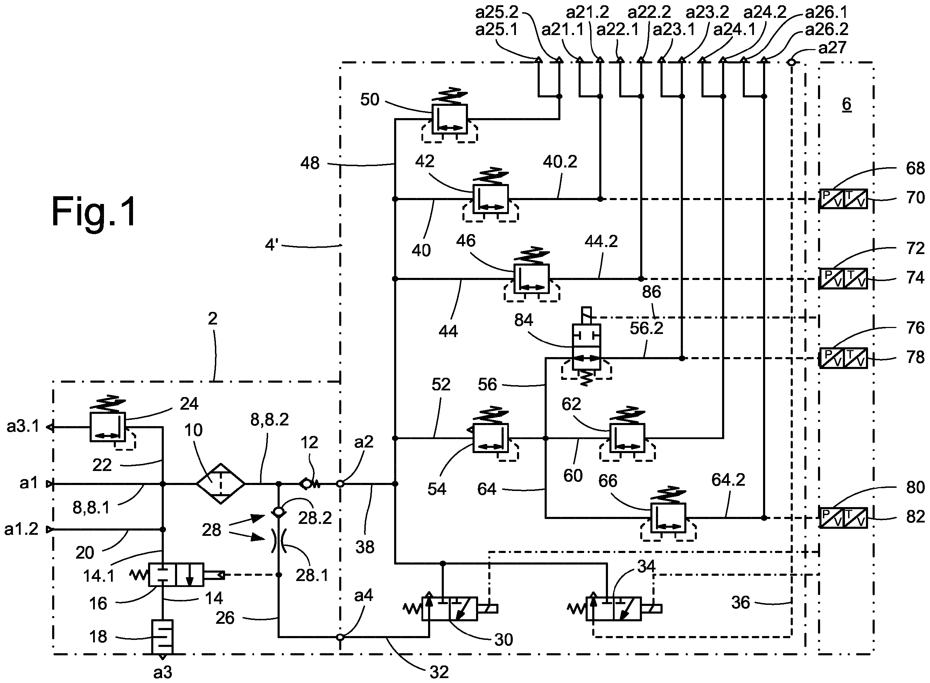

In einer in Fig. 1 dargestellten ersten Ausführungsform eines erfindungsgemäßen Mehrkreisschutzventils 4' ist in der Verbindungsleitung 56 für die Feststellbremskreise a23.1, a23.2 anstelle des bei der Beschreibung der Fig. 7 erwähnten Überströmventils 58 ein von dem elektronischen Steuergerät 6 über eine elektrische Steuerleitung 86 aktiv steuerbares Absperrventil 84 angeordnet. Das Absperrventil 84 ist als ein pneumatisch servounterstütztes 2/2-Wege-Magnetschaltventil ausgebildet, dessen Schaltelement durch ein Federelement sowie den an einem Ausgangsanschluss anliegenden pneumatischen Druck im öffnenden Sinn belastet beziehungsweise belastbar ist und durch einen Elektromagneten sowie den an einem Eingangsanschluss anliegenden pneumatischen Druck im schließenden Sinn belastbar ist.

Die Standardfunktionen, wie die vorrangige Belüftung der Betriebsbremskreise a21.1, a21.2; a22.1, a22.2 und die nachrangige Belüftung der Feststellbremskreise a23.1, a23.2, ist auch mit dem aktiv steuerbaren Absperrventil 84 gewährleistet, da die relevanten Luftdrücke über die betreffenden Drucksensoren 68, 72, 76 erfasst werden. Zusätzlich können nun aber die Feststellbremskreise a23.1, a23.2 in einer Sonderfunktion auch ohne eine Fremdbelüftung über die eigene Druckluftversorgungsanlage 2 belüftet und somit die Feststellbremsen gelöst werden, wenn das betreffende Kraftfahrzeug bei einem Defekt an einem der Betriebsbremskreise a21.1, a21.2; a22.1, a22.2 abgeschleppt werden muss.

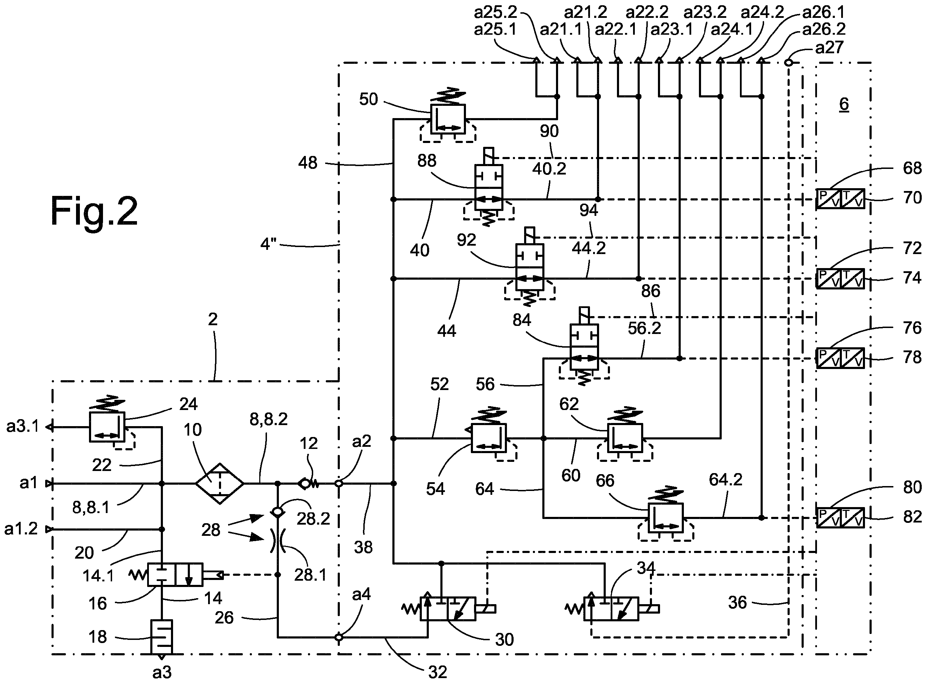

In einer zweiten Ausführungsform eines erfindungsgemäßen Mehrkreisschutzventils 4" gemäß Fig. 2 sind zusätzlich zu dem Überströmventil 58 für die Feststellbremskreise a23.1, a23.2 auch die Überströmventile 42, 46 für die Betriebsbremskreise a21.1, a21.2; a22.1, a22.2 durch von dem elektronischen Steuergerät 6 über jeweils eine elektrische Steuerleitung 86, 90, 94 aktiv steuerbare Absperrventile 84, 88, 92 ersetzt.

Auch bei dieser Ausführungsform des Mehrkreisschutzventils 4" sind die Standardfunktionen aufgrund der sensorischen Erfassung der relevanten Luftdrücke gewährleistet. Zusätzlich entfällt aber eine bei Überströmventilen aufgrund von Verschleiß an bestimmten Bauteilen erforderliche mechanische Nachjustierung, so dass die Funktion der Betriebsbremsen und der Feststellbremsen ohne Wartungsarbeiten über eine längere Betriebszeit in gleichbleibender Qualität gewährleistet ist.

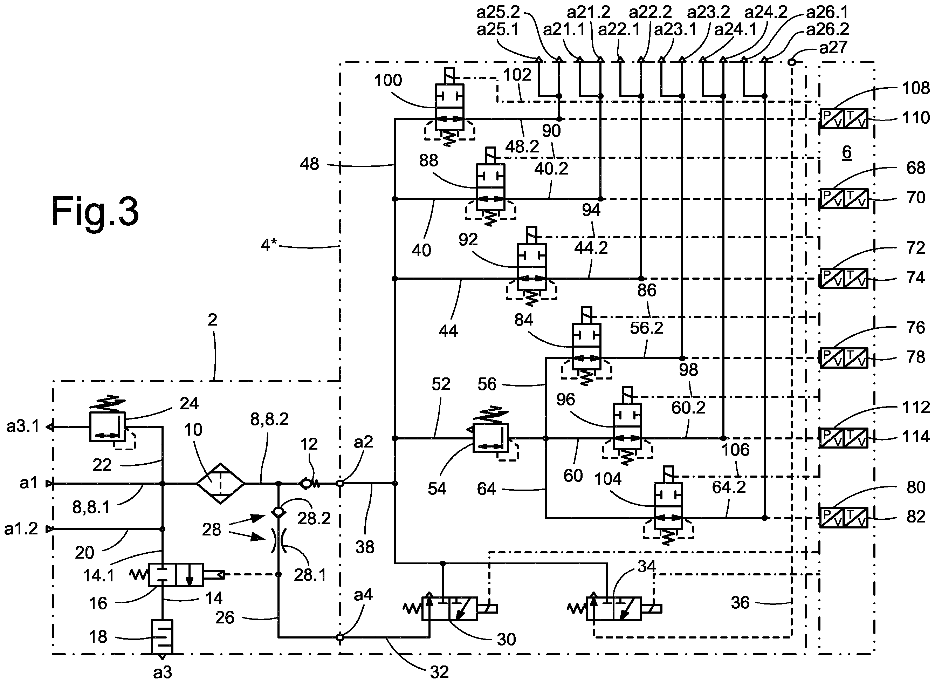

In einer dritten Ausführungsform eines erfindungsgemäßen Mehrkreisschutzventils 4* gemäß Fig. 3 sind nun im Unterschied zum bekannten Mehrkreisschutzventil 4 gemäß Fig. 7 die Überströmventile 42, 46, 50, 58, 62, 66 für alle Verbraucherkreise a21.1, a21.2; a22.1, a22.2; a23.1, a23.2; a24.1, a24.2; a25.1, a25.2; a26.1, a26.2 durch von dem elektronischen Steuergerät 6 über jeweils eine elektrische Steuerleitung 86, 90, 94, 98, 102, 106 aktiv steuerbare Absperrventile 84, 88, 92, 96, 100, 104 ersetzt. Zudem sind nun auch an die Ausgangsabschnitte 48.2, 60.2 der Verbindungsleitungen 48, 60 für die Luftfederungskreise a25.1, a25.2 und die Getriebesteuerungskreise a24.1, 24.2 jeweils ein Drucksensor 108, 112 und ein Temperatursensor 110, 114 angeschlossen. Somit können bei dieser dritten erfindungsgemäßen Ausführungsform des Mehrkreisschutzventils 4* alle Verbraucherkreise a21.1, a21.2; a22.1, a22.2; a23.1, a23.2; a24.1, a24.2; a25.1, a25.2; a26.1, a26.2 vollvariabel mit der Druckluftversorgung verbunden oder von dieser getrennt werden.

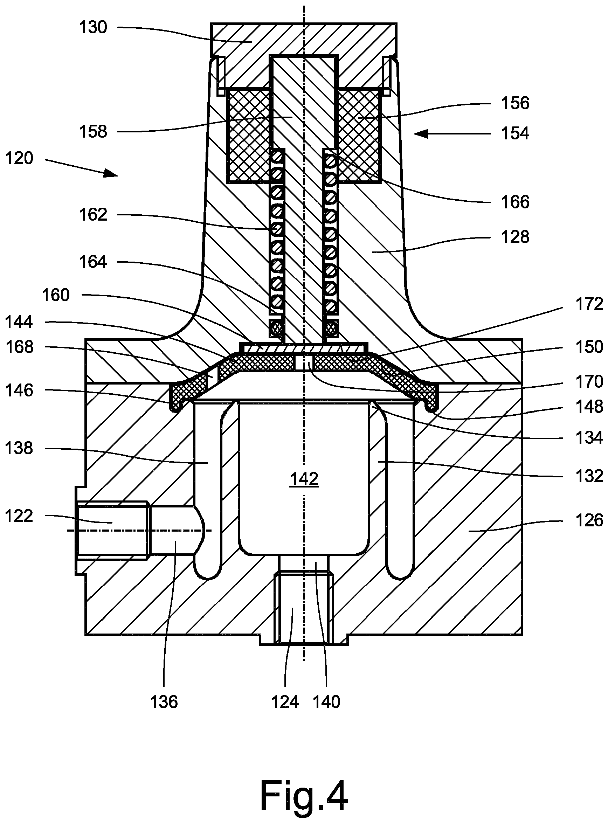

Nachfolgend wird anhand der Figuren 4 bis 6 eine bevorzugte Ausführungsform eines aktiv steuerbaren Absperrventils 84 beschrieben, welches in den Figuren 1 bis 3 lediglich schematisch dargestellt ist.

Das Absperrventil 84 ist als ein Membransitzventil 120 mit einem Eingangsanschluss 122 sowie einem Ausgangsanschluss 124 ausgebildet und weist ein Basisgehäuse 126, ein Gehäuseoberteil 128 sowie einen Gehäusedeckel 130 auf. Im Inneren des Basisgehäuses 126 ist eine zylindrische Zentralhülse 132 angeordnet, die an ihrem inneren, in den Figuren 4 bis 6 oberen Rand einen Ventilsitz 134 aufweist. Der Eingangsanschluss 122 ist über einen Eingangskanal 136 mit einem zylindrischen Ringraum 138 verbunden, der konzentrisch um die Zentralhülse 132 angeordnet ist. Der Ausgangsanschluss 124 ist über einen Ausgangskanal 140 mit einem zylindrischen Zentralraum 142 verbunden, der innerhalb der Zentralhülse 132 ausgebildet ist. Eine weitgehend kreisscheibenförmige Membran 144 ist oberhalb des Ventilsitzes 134 angeordnet, greift mit einem äußeren Ringwulst 146 in eine Ringnut 148 des Basisgehäuses 126 ein, und ist zwischen dem Basisgehäuse 126 und dem Gehäuseoberteil 128 eingespannt. Zusammen mit einer Innenwand 150 des Gehäuseoberteils 128 begrenzt die Membran 144 einen Servodruckraum 152.

Ein Elektromagnet 154 mit einer Magnetspule 156 und einem axialbeweglichen Anker 158 ist auf der von dem Ventilsitz 134 abgewandten Seite der Membran 144 senkrecht zu dieser angeordnet. Die Magnetspule 156 ist in einer Ausnehmung des Gehäuseoberteils 128 angeordnet und durch den Gehäusedeckel 130 fixiert. Der Anker 158 ist in Richtung zu der Membran 144 verlängert ausgebildet und bei diesem Ausführungsbeispiel endseitig mit einer den Ventilsitz 134 überdeckenden Druckscheibe 160 versehen. Diese Druckscheibe 160 kann alternativ dazu auch gegenüber dem dann freien Ende des Ankers 158 nur an der ankerseitigen Oberseite der Membran 144 befestigt sein. Bei dem in den Figuren dargestellten Ausführungsbeispiel wird die Druckscheibe 160 im unbestromten Zustand des Elektromagneten 154 von einem Federelement 162 an der gehäusefesten Innenwand 150 gehalten und drückt bei bestromtem Elektromagneten 154 die Membran 144 entgegen der Rückstellkraft des Federelementes 162 gegen den Ventilsitz 134. Das Federelement 162 ist in platzsparender Weise als eine Schraubenfeder ausgebildet, die koaxial den Anker 158 des Elektromagneten 154 umgibt und axial innen an einem gehäusefesten Ringbund 164 sowie axial außen an einem Ringbund 166 des Ankers 158 abgestützt ist.

Die Membran 144 weist angrenzend an den Ringraum 138 mindestens eine Eintrittsöffnung 168 in den Servodruckraum 152 sowie angrenzend an den Zentralraum 142 eine mittig angeordnete Austrittsöffnung 170 zur Ableitung von Luft aus dem Servodruckraum 152 auf. Die gehäusefeste Innenwand 150 weist eine kreisscheibenförmige Vertiefung 172 auf, die derart dimensioniert ist, dass die Druckscheibe 160 des Ankers 158 bei unbestromtem Elektromagneten 154 weitgehend bündig darin aufgenommen ist.

In Fig. 4 ist das Membranventil 120 in seinem Ruhezustand abgebildet, in dem die Anschlüsse 122, 124 drucklos sind und der Elektromagnet 154 unbestromt ist. Demzufolge liegt dort die Druckscheibe 160 des Ankers 158 innerhalb der Vertiefung 172 weitgehend bündig an der gehäusefesten Innenwand 150 an, und die mit konstanter Dicke ausgeführte Membran 144 liegt aufgrund einer entsprechenden Formgebung an der gehäusefesten Innenwand 150 und der Druckscheibe 160 des Ankers 158 an. Da die Membran 144 von dem Ventilsitz 134 abgehoben ist, sind der Eingangsanschluss 122 und der Ausgangsanschluss 124 miteinander verbunden, so dass das Membranventil 120 geöffnet ist.

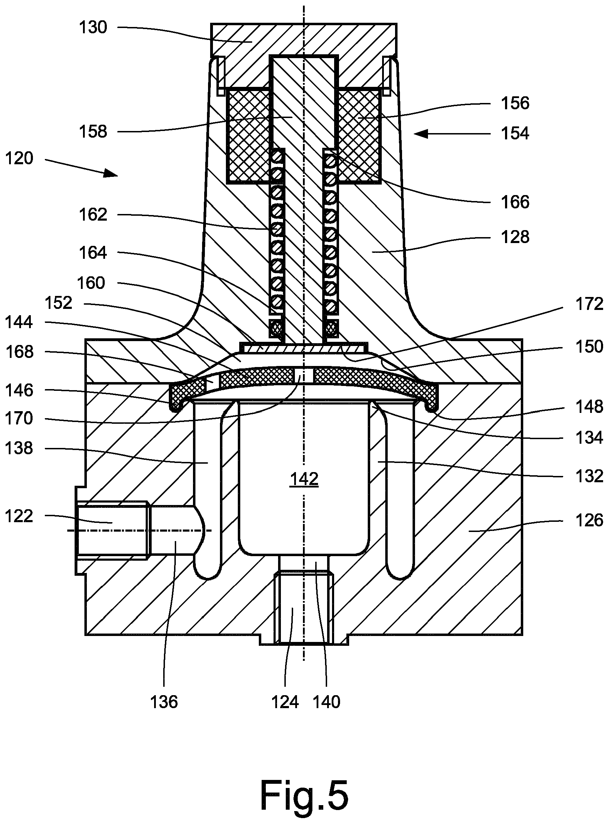

In Fig. 5 ist das Membranventil 120 in einem ersten Betriebszustand abgebildet, in dem der Eingangsanschluss 122 druckführend ist, der Elektromagnet 154 jedoch weiterhin unbestromt ist. Somit strömt nun Druckluft von dem Eingangsanschluss 122 über den Ringraum 138, den Ventilsitz 134 und den Zentralraum 142 zu dem Ausgangsanschluss 124. Dabei kann auch Druckluft über die mindestens eine Eintrittsöffnung 168 der Membran 144 in den Servodruckraum 152 einströmen und für ein Abheben der Membran 144 von der gehäusefesten Innenwand 150 sowie der Druckscheibe 160 sorgen. Da die Druckluft aber durch die mittig angeordnete Austrittsöffnung 170 wieder aus dem Servodruckraum 152 ausströmen kann, wird die Membran 144 nur geringfügig von der gehäusefesten Innenwand 150 abgedrückt, so dass das Membranventil 120 geöffnet bleibt.

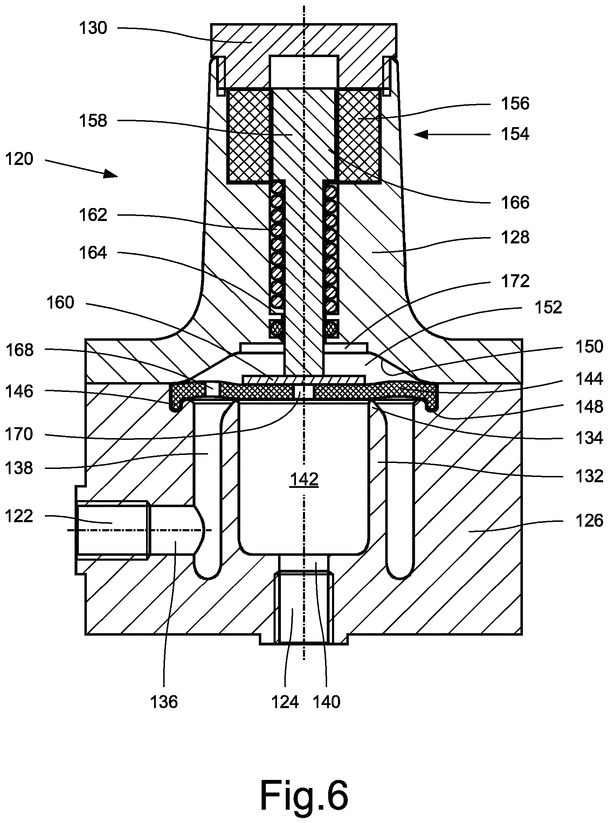

In Fig. 6 ist das Membranventil 120 in einem zweiten Betriebszustand abgebildet, in dem der Eingangsanschluss 122 weiterhin druckführend ist, der Elektromagnet 154 nun aber bestromt ist. Demzufolge ist der Anker 158 des Elektromagneten 154 in den Servodruckraum 152 eingetreten und hat die Membran 144 mit der Druckscheibe 160 gegen den Ventilsitz 134 gedrückt, so dass das Membranventil 120 nun geschlossen ist. Da mit dem Anlegen der Druckscheibe 160 an die Membran 144 auch die mittig angeordnete Austrittsöffnung 170 verschlossen wird, ist die aus dem Ringraum 138 über die Eintrittsöffnung 168 in den Servodruckraum 152 einströmende Druckluft auf die Rückwand der Druckscheibe 160 und somit sowohl für den Schließvorgang als auch für den Haltevorgang im geschlossenen Zustand unterstützend wirksam. Dadurch kann das Membranventil 120 mit einer relativ geringen Stromaufnahme des Elektromagneten 154 geschlossen und geschlossen gehalten werden.

Aufgrund seiner kompakten Abmessungen und seiner geringen Stromaufnahme ist das vorgestellte Membranventil 120 besonders gut für eine Verwendung als aktiv steuerbares Kreisschutzventil 84 in einem Mehrkreisschutzventil 4', 4", 4* geeignet.

### Bezugszeichenliste (Teil der Beschreibung)

- 2: Druckluftversorgungsanlage
- 4: Mehrkreisschutzventil (bekannt)
- 4': Mehrkreisschutzventil (erste erfindungsgemäße Ausführungsform)
- 4": Mehrkreisschutzventil (zweite erfindungsgemäße Ausführungsform)
- 4*: Mehrkreisschutzventil (dritte erfindungsgemäße Ausführungsform)
- 6: Elektronisches Steuergerät
- 8: Förderleitung
- 8.1: Eingangsabschnitt
- 8.2: Ausgangsabschnitt
- 10: Trocknereinheit
- 12: Rückschlagventil
- 14: Entlüftungsleitung
- 14.1: Eingangsabschnitt
- 16: Entlüftungsventil
- 18: Schalldämpfer
- 20: Fremdbelüftungsleitung
- 22: Entlüftungsleitung
- 24: Druckbegrenzungsventil
- 26: Regenerationsleitung
- 28: Drosselrückschlagventil
- 28.1: Drossel
- 28.2: Rückschlagventil
- 30: Regenerationssteuerventil
- 32: Anschlussleitung
- 34: Kompressorsteuerventil
- 36: Steuerdruckleitung
- 38: Eingangsleitung
- 40: Verbindungsleitung
- 40.2: Ausgangsabschnitt
- 42: Kreisschutzventil, Überströmventil
- 44: Verbindungsleitung
- 44.2: Ausgangsabschnitt
- 46: Kreisschutzventil, Überströmventil
- 48: Verbindungsleitung
- 48.2: Ausgangsabschnitt
- 50: Kreisschutzventil, Überströmventil
- 52: Verbindungsleitung
- 54: Druckbegrenzungsventil
- 56: Verbindungsleitung
- 56.2: Ausgangsabschnitt
- 58: Kreisschutzventil, Überströmventil
- 60: Verbindungsleitung
- 60.2: Ausgangsabschnitt
- 62: Kreisschutzventil, Überströmventil
- 64: Verbindungsleitung
- 64.2: Ausgangsabschnitt
- 66: Kreisschutzventil, Überströmventil
- 68: Drucksensor
- 70: Temperatursensor
- 72: Drucksensor
- 74: Temperatursensor
- 76: Drucksensor
- 78: Temperatursensor
- 80: Drucksensor
- 82: Temperatursensor
- 84: Kreisschutzventil, Absperrventil
- 86: Steuerleitung
- 88: Kreisschutzventil, Absperrventil
- 90: Steuerleitung
- 92: Kreisschutzventil, Absperrventil
- 94: Steuerleitung
- 96: Kreisschutzventil, Absperrventil
- 98: Steuerleitung
- 100: Kreisschutzventil, Absperrventil
- 102: Steuerleitung
- 104: Kreisschutzventil, Absperrventil
- 106: Steuerleitung
- 108: Drucksensor
- 110: Temperatursensor
- 112: Drucksensor
- 114: Temperatursensor
- 120: Membranventil
- 122: Eingangsanschluss
- 124: Ausgangsanschluss
- 126: Basisgehäuse
- 128: Gehäuseoberteil
- 130: Gehäusedeckel
- 132: Zentralhülse
- 134: Ventilsitz
- 136: Eingangskanal
- 138: Ringraum
- 140: Ausgangskanal
- 142: Zentralraum
- 144: Schaltelement, Membran
- 146: Ringwulst
- 148: Ringnut
- 150: Innenwand
- 152: Servodruckraum
- 154: Elektromagnet
- 156: Magnetspule
- 158: Anker
- 160: Druckscheibe
- 161: Durchströmöffnung in der Druckscheibe
- 162: Federelement, Schraubenfeder
- 164: Ringbund
- 166: Ringbund
- 168: Eintrittsöffnung
- 170: Austrittsöffnung
- 172: Vertiefung
- a1: Eingangsanschluss
- a1.2: Eingangsanschluss
- a2: Ausgangsanschluss
- a3: Entlüftungsausgang
- a3.1: Entlüftungsausgang
- a4: Eingangsanschluss
- a21.1: Eingangsanschluss
- a21.2: Eingangsanschluss
- a22.1: Eingangsanschluss
- a22.2: Eingangsanschluss
- a23.1: Eingangsanschluss
- a23.2: Eingangsanschluss
- a24.1: Eingangsanschluss
- a24.2: Eingangsanschluss
- a25.1: Eingangsanschluss
- a25.2: Eingangsanschluss
- a26.1: Eingangsanschluss
- a26.2: Eingangsanschluss
- a27: Steuereingang

## Patentansprüche

1. Mehrkreisschutzventil (4', 4", 4*) einer Druckluftanlage eines Kraftfahrzeugs, das zwischen dem Ausgangsanschluss (a2) einer Druckluftversorgungsanlage (2) und den Eingangsanschlüssen (a21.1, a21.2; a22.1, a22.2; a23.1, a23.2; a24.1, a24.2; a25.1, a25.2; a26.1, a26.2) mehrerer Verbraucherkreise angeordnet ist, und in dem für zumindest einige Verbraucherkreise jeweils ein Kreisschutzventil (42, 46, 50, 58, 62, 66) angeordnet ist, welche jeweils in einer Verbindungsleitung (40, 44, 48, 56, 60, 64) zwischen dem Ausgangsanschluss (a2) der Druckluftversorgungsanlage (2) und dem Eingangsanschluss (a21.1, a21.2; a22.1, a22.2; a23.1, a23.2; a24.1, a24.2; a25.1, a25.2; a26.1, a26.2) des betreffenden Verbraucherkreises angeordnet sind, **dadurch gekennzeichnet, dass** mindestens eines der Kreisschutzventile (84, 88, 92, 96, 100, 104) als ein von einem elektronischen Steuergerät (6) über jeweils eine elektrische Steuerleitung (86, 90, 94, 98, 102, 106) aktiv steuerbares Absperrventil ausgebildet ist, und dass zumindest an den ausgangsseitigen Abschnitten (40.2, 44.2, 56.2) der Verbindungsleitungen (40, 44, 56) der Betriebsbremskreise und des Feststellbremskreises jeweils ein Drucksensor (68, 72, 76) angeschlossen ist, der in das elektronische Steuergerät (6) integriert oder über eine elektrische Sensorleitung an das elektronische Steuergerät (6) angeschlossen ist.

2. Mehrkreisschutzventil nach Anspruch 1, **dadurch gekennzeichnet, dass** zumindest das Kreisschutzventil (84) des Feststellbremskreises als ein aktiv steuerbares Absperrventil ausgebildet ist.

3. Mehrkreisschutzventil nach Anspruch 1, **dadurch gekennzeichnet, dass** zumindest die Kreisschutzventile (84, 88, 92) der Betriebsbremskreise und des Feststellbremskreises als aktiv steuerbare Absperrventile ausgebildet sind.

4. Mehrkreisschutzventil nach einem der Ansprüche 1 bis 3, **dadurch gekennzeichnet, dass** mindestens eines der aktiv steuerbaren Absperrventile (84, 88, 92, 96, 100, 104) als ein pneumatisch servounterstütztes 2/2-Wege-Magnetschaltventil (120) ausgebildet ist, dessen Schaltelement (144) mittels eines Federelementes (162) sowie den an einem Ausgangsanschluss (124) anliegenden pneumatischen Druck im öffnenden Sinn belastet beziehungsweise belastbar ist sowie durch einen Elektromagneten (154) und den an einem Eingangsanschluss (122) anliegenden pneumatischen Druck im schließenden Sinn belastbar ist.

5. Mehrkreisschutzventil nach Anspruch 4, **dadurch gekennzeichnet, dass** das Absperrventil (84) als ein Membransitzventil (120) ausgebildet ist, dessen als Membran ausgebildetes Schaltelement (144) mit einem an dem inneren Rand einer gehäusefesten Zentralhülse (132) angeordneten Ventilsitz (134) zusammenwirkt sowie zusammen mit einer gehäusefesten Innenwand (150) einen Servodruckraum (152) begrenzt, dass der Eingangsanschluss (122) des Membransitzventils (120) mit einem zylindrischen Ringraum (138) verbunden ist, welcher konzentrisch um die Zentralhülse (132) angeordnet ist, dass der Ausgangsanschluss (124) des Membransitzventils (120) mit einem zylindrischen Zentralraum (142) verbunden ist, welcher innerhalb der Zentralhülse (132) angeordnet ist, und dass ein Elektromagnet (154) mit einer Magnetspule (156) sowie einem axialbeweglichen Anker (158) auf der von dem Ventilsitz (134) abgewandten Seite der Membran (144) senkrecht zu dieser angeordnet ist, wobei der Anker (158) in Richtung zur Membran (144) verlängert und endseitig mit einer den Ventilsitz (134) geometrisch überdeckenden Druckscheibe (160) versehen ist, welche im unbestromten Zustand des Elektromagneten (154) von einem Federelement (162) an der gehäusefesten Innenwand (150) gehalten wird sowie bei bestromtem Elektromagneten (154) die Membran (144) entgegen der Rückstellkraft des Federelementes (162) gegen den Ventilsitz (134) drückt.

6. Mehrkreisschutzventil nach Anspruch 5, **dadurch gekennzeichnet, dass** die Druckscheibe (160) nur an der ankerseitigen Oberseite der Membran (144) befestigt ist und eine Durchströmöffnung aufweist, welche koaxial zu einer mittigen Austrittsöffnung (170) in der Membran (144) ausgebildet ist.

7. Mehrkreisschutzventil nach Anspruch 5 oder 6, **dadurch gekennzeichnet, dass** das Federelement (162) des Membransitzventils (120) als eine Schraubenfeder ausgebildet ist, welche koaxial über dem Anker (158) des Elektromagneten (154) angeordnet ist und axial innen an einem gehäusefesten Ringbund (164) sowie axial außen an einem Ringbund (166) des Ankers (158) abgestützt ist.

8. Mehrkreisschutzventil nach einem der Ansprüche 5 bis 7, **dadurch gekennzeichnet, dass** die Membran (144) des Membransitzventils (120) angrenzend an den Ringraum (138) mindestens eine Eintrittsöffnung (168) in den Servodruckraum (152) aufweist, und dass die Membran (144) des Membransitzventils (120) angrenzend an den Zentralraum (142) die mittig angeordnete Austrittsöffnung (170) aufweist.

9. Mehrkreisschutzventil nach einem der Ansprüche 5 bis 8, **dadurch gekennzeichnet, dass** die Membran (144) des Membransitzventils (120) derart ausgebildet ist, dass diese bei drucklosen Anschlüssen (122, 124) und bei unbestromtem Elektromagneten (154) zumindest weitgehend an der gehäusefesten Innenwand (150) anliegt.

10. Mehrkreisschutzventil nach einem der Ansprüche 5 bis 9 **dadurch gekennzeichnet, dass** die gehäusefeste Innenwand (150) des Membransitzventils (120) eine kreisscheibenförmige Vertiefung (172) aufweist, welche derart dimensioniert ist, dass die Druckscheibe (160) bei unbestromtem Elektromagneten (154) weitgehend bündig darin aufgenommen ist.

## Claims

1. A multi-circuit safety valve (4', 4", 4*) of a compressed air system of a motor vehicle, which is arranged between the output terminal (a2) of a compressed air feed installation (2) and the input terminals (a21.1, a21.2; a22.1, a22.2; a23.1, a23.2; a24.1, a24.2; a25.1, a25.2; a26.1, a26.2) of a plurality of consumer circuits, and in which, for at least some consumer circuits, a circuit safety valve (42, 46, 50, 58, 62, 66) is arranged, which are each arranged in a connection line (40, 44, 48, 56, 60, 64) between the output terminal (a2) of the compressed air compressed air feed installation (2) and the input terminal (a21.1, a21.2; a22.1, a22.2; a23.1, a23.2; a24.1, a24.2; a25.1, a25.2; a26.1, a26.2) of the relevant consumer circuit, **characterized in that** at least one of the circuit safety valves (84, 88, 92, 96, 100, 104) is configured as a shut-off valve which can be actively controlled by an electronic control device (6) via a respective electrical control line (86, 90, 94, 98, 102, 106), and that at least at the sections (40.2, 44.2, 56.2) of the connection lines (40, 44, 56) on the outside of the service brake circuits and of the parking brake circuit in each case a pressure sensor (68, 72, 76) is connected, which is integrated into the electronic control device (6) or is connected to the electronic control device (6) via an electrical sensor line.

2. The multi-circuit safety valve according to claim 1, **characterized in that** at least the circuit safety valve (84) of the parking brake circuit is configured as an actively controllable shut-off valve.

3. The multi-circuit safety valve according to claim 1, **characterized in that** at least the circuit safety valves (84, 88, 92) of the service brake circuits and of the parking brake circuit are configured as actively controllable shut-off valves.

4. The multi-circuit safety valve according to any of claims 1 to 3, **characterized in that** at least one of the actively controllable shut-off valves (84, 88, 92, 96, 100, 104) is configured as a pneumatic servo-supported 2/2 way solenoid switching valve (120), the switching element (144) of which is loaded or can be loaded in the opening sense by means of a spring element (162) as well as the pneumatic pressure applied at an output terminal (124) as well as by an electromagnet (154) and the pneumatic pressure applied at an input terminal (122) in the closing sense.

5. The multi-circuit safety valve according to claim 4, **characterized in that** the shut-off valve (84) is configured as a diaphragm seat valve (120), the switching element (144) configured as a diaphragm of which interacts with a valve seat (134) arranged at the inner edge of a central sleeve (132) fixed to the housing as well as together with an inner wall (150) fixed to the housing delimits a servo pressure chamber (152), that the input terminal (122) of the diaphragm seat valve (120) is connected to a cylindrical annular space (138), which is arranged concentrically about the central sleeve (132), that the output terminal (124) of the diaphragm seat valve (120) is connected to a cylindrical central space (142), which is arranged within the central sleeve (132), and that an electromagnet (154) with a solenoid (156) as well as an axially moveable armature (158) is arranged on the side of the diaphragm (144) averted from the valve seat (134) perpendicular to said side of the diaphragm, wherein the armature (158) extends in the direction toward the diaphragm (144) and is provided on its end side with a pressure disk (160) geometrically covering the valve seat (134), which in the current-less state of the electromagnet (154) is held by a spring element spring element (162) at the inner wall (150) fixed to the housing as well as in the case of energized electromagnets (154) presses the diaphragm (144) against the valve seat (134) contrary to the restoring force of the spring element spring element (162).

6. The multi-circuit safety valve according to claim 5, **characterized in that** the pressure disk (160) is attached only on the top side on the armature side of the diaphragm (144) and comprises a throughflow opening which is configured coaxially to a central outlet opening (170) in the diaphragm (144).

7. The multi-circuit safety valve according to claim 5 or 6, **characterized in that** the spring element spring element (162) of the diaphragm seat valve (120) is configured as a helical spring, which is arranged coaxially above the armature (158) of the electromagnet (154) and is supported axially inward at an annular collar (164) fixed to the housing as well as axially outward at an annular collar (166) of the armature (158) .

8. The multi-circuit safety valve according to claim 5 to 7, **characterized in that** the diaphragm (144) of the diaphragm seat valve seat valve (120) comprises at least one inlet opening (168) in the servo pressure chamber (152) adjacent to the annular space (138), and that the diaphragm (144) of the diaphragm seat valve seat valve (120) comprises the centrally arranged outlet opening (170) adjacent to the central space (142).

9. The multi-circuit safety valve according to claim 5 to 8, **characterized in that** the diaphragm (144) of the diaphragm seat valve (120) is configured such that, in the event of pressure-less terminals (122, 124) and in the event of a current-less electromagnet (154), at least to a great extent abuts on the inner wall (150) fixed to the housing.

10. The multi-circuit safety valve according to claim 5 to 9, **characterized in that** the inner wall (150) of the diaphragm seat valve (120) fixed to the housing comprises a circular disk-shaped depression (172), which is dimensioned such that the pressure disk (160) is to a great extent flushly incorporated therein in the event of a current-less electromagnet (154).

## Revendications

1. Valve de sécurité multicircuits (4', 4", 4*) d'un dispositif à air comprimé d'un véhicule automobile, qui est agencée entre le raccord de sortie (a2) d'une installation d'alimentation en air comprimé (2) et les raccords d'entrée (a21.1, a21.2 ; a22.1, a22.2 ; a23.1, a23.2 ; a24.1, a24.2 ; a25.1, a25.2 ; a26.1, a26.2) de plusieurs circuits de récepteurs, et dans laquelle pour au moins quelques circuits de récepteurs est respectivement agencée une valve de sécurité de circuit (42, 46, 50, 58, 62, 66), lesquelles sont respectivement agencées dans une conduite de raccordement (40, 44, 48, 56, 60, 64) entre le raccord de sortie (a2) de l'installation d'alimentation en air comprimé (2) et le raccord d'entrée (a21.1, a21.2 ; a22.1, a22.2 ; a23.1, a23.2 ; a24.1, a24.2 ; a25.1, a25.2 ; a26.1, a26.2) du circuit de récepteurs concerné, **caractérisée en ce qu'**au moins l'une des valves de sécurité de circuit (84, 88, 92, 96, 100, 104) est conçue en tant que valve de barrage qui peut être commandée activement par un appareil de commande (6) électronique via respectivement un câble-pilote (86, 90, 94, 98, 102, 106) électrique, et **en ce qu'**au moins au niveau des sections côté sortie (40.2, 44.2, 56.2) des conduites de raccordement (40, 44, 56) des circuits de freinage de service et du circuit de freinage de stationnement est respectivement raccordé un capteur de pression (68, 72, 76) qui est intégré dans l'appareil de commande (6) électronique ou raccordé via un câble de détection électrique à l'appareil de commande (6) électronique.

2. Valve de sécurité multicircuits selon la revendication 1, **caractérisée en ce qu'**au moins la valve de sécurité de circuit (84) du circuit de freinage de stationnement est conçue en tant que valve de barrage qui peut être commandée activement.

3. Valve de sécurité multicircuits selon la revendication 1, **caractérisée en ce qu'**au moins les valves de sécurité de circuit (84, 88, 92) des circuits de freinage de service et du circuit de freinage de stationnement sont conçues en tant que valves de barrage qui peuvent être commandées activement.

4. Valve de sécurité multicircuits selon l'une des revendications 1 à 3, **caractérisée en ce qu'**au moins l'une des valves de barrage (84, 88, 92, 96, 100, 104) qui peuvent être commandées activement est conçue en tant que distributeur de commutation magnétique 2/2 (120) à direction assistée pneumatique dont l'élément de commutation (144) est ou peut être sollicité dans le sens de l'ouverture au moyen d'un élément de suspension (162) ainsi que de la pression pneumatique qui s'applique à un raccord de sortie (124), et peut être sollicité dans le sens de la fermeture par un électro-aimant (154) et la pression pneumatique qui s'applique à un raccord d'entrée (122).

5. Valve de sécurité multicircuits selon la revendication 4, **caractérisée en ce que** la valve de barrage (84) est conçue en tant que distributeur à clapet à membrane (120) dont l'élément de commutation (144) conçu en tant que membrane coopère avec un siège de soupape (134) agencé sur le bord intérieur d'une douille centrale (132) solidaire du boîtier et, ensemble avec une paroi intérieure (150) solidaire du boîtier, délimite une chambre de servopression (152), **en ce que** le raccord d'entrée (122) du distributeur à clapet à membrane (120) est relié à un espace annulaire (138) cylindrique, lequel est agencé de façon concentrique autour de la douille centrale (132), **en ce que** le raccord de sortie (124) du distributeur à clapet à membrane (120) est relié à un espace central (142) cylindrique, lequel est agencé à l'intérieur de la douille centrale (132), et **en ce qu'**un électro-aimant (154) est agencé perpendiculairement à la membrane (144) avec une bobine magnétique (156) ainsi qu'une armature (158) axialement mobile sur le côté opposé au siège de soupape (134) de la membrane (144), dans laquelle l'armature (158) est rallongée dans la direction de la membrane (144) et dotée, du côté extrémité, d'un disque de pression (160) qui recouvre géométriquement le siège de soupape (134), lequel disque de pression est maintenu à l'état non alimenté en courant de l'électro-aimant (154) contre la paroi intérieure (150) solidaire du boîtier par un élément de suspension (162) et, dans le cas d'électro-aimants (154) alimentés en courant, la membrane (144) s'appuie contre le siège de soupape (134) à l'encontre de la force de rappel de l'élément de suspension (162).

6. Valve de sécurité multicircuits selon la revendication 5, **caractérisée en ce que** le disque de pression (160) est fixé uniquement du côté armature sur le côté supérieur de la membrane (144) et présente un orifice de circulation, lequel est conçu de façon coaxiale à un orifice d'évacuation (170) au milieu dans la membrane (144).

7. Valve de sécurité multicircuits selon la revendication 5 ou 6, **caractérisée en ce que** l'élément de suspension (162) du distributeur à clapet à membrane (120) est conçu en tant que ressort hélicoïdal, lequel est agencé de façon coaxiale par-dessus l'armature (158) de l'électro-aimant (154) et est soutenu axialement à l'intérieur contre une collerette annulaire (164) solidaire du boîtier ainsi qu'axialement à l'extérieur contre une collerette annulaire (166) de l'armature (158).

8. Valve de sécurité multicircuits selon l'une des revendications 5 à 7, **caractérisée en ce que** la membrane (144) du distributeur à clapet à membrane (120) présente, adjacent à l'espace annulaire (138), au moins un orifice d'admission (168) dans la chambre de servopression (152), et **en ce que** la membrane (144) du distributeur à clapet à membrane (120) présente, adjacent à l'espace central (142), l'orifice d'évacuation (170) agencé au milieu.

9. Valve de sécurité multicircuits selon l'une des revendications 5 à 8, **caractérisée en ce que** la membrane (144) du distributeur à clapet à membrane (120) est conçue de sorte que celle-ci s'applique au moins largement contre la paroi intérieure (150) solidaire du boîtier lorsque les raccords (122, 124) sont sans pression et les électro-aimants (154) sont non alimentés.

10. Valve de sécurité multicircuits selon l'une des revendications 5 à 9, **caractérisée en ce que** la paroi intérieure (150) solidaire du boîtier du distributeur à clapet à membrane (120) présente un renfoncement (172) en forme de disque circulaire, lequel renfoncement est dimensionné de sorte que le disque de pression (160) y soit accueilli largement par affleurement lorsque les électro-aimants (154) sont non alimentés.
